(19) Europäisches Patentamt
European Patent Office
Office européen des brevets

(11) Numéro de publication: **0 351 003 A1**

(12) **DEMANDE DE BREVET EUROPEEN**

(21) Numéro de dépôt: **89201793.0**

(51) Int. Cl.⁴: **G06F 15/36 , G06F 15/68**

(22) Date de dépôt: **06.07.89**

(30) Priorité: **12.07.88 FR 8809465**

(43) Date de publication de la demande: **17.01.90 Bulletin 90/03**

(84) Etats contractants désignés: **DE FR GB IT SE**

(71) Demandeur: **TELECOMMUNICATIONS RADIOELECTRIQUES ET TELEPHONIQUES T.R.T.**
**88, rue Brillat Savarin**
**F-75013 Paris(FR)**
(84) **FR**

Demandeur: **N.V. Philips' Gloeilampenfabrieken**
**Groenewoudseweg 1**
**NL-5621 BA Eindhoven(NL)**
(84) **DE GB IT SE**

(72) Inventeur: **Delange, Christophe SOCIETE CIVILE S.P.I.D.**
**209 rue de l'Université**
**F-75007 Paris(FR)**

(74) Mandataire: **Chaffraix, Jean et al**
**Société Civile S.P.I.D. 209, rue de l'Université**
**F-75007 Paris(FR)**

(54) **Dispositif pour déterminer des objets contrastés dans une image.**

(57) Ce dispositif comporte au moins un bloc de traitement (2) pourvu d'organes de calculs de moyennes pour calculer pour chaque point d'image différentes valeurs de moyennes de valeur de fonds (16, 18, 20), d'un organe de mesure de contraste (22) pour fournir une valeur d'écart entre les moyennes et la luminance L(i,j) du point à traiter, d'un organe de comparaison (30) pour fournir l'indication d'objet contrasté en comparant les différentes valeurs d'écart avec au moins une valeur de seuil prédéterminée et d'un organe d'affectation (55) de valeur de fond pour affecter une valeur de fond pour chaque point d'image à partir desdites moyennes. Les organes de calculs de moyennes (16, 18, 20) sont constitués à partir de premiers moyens de stockate (95, 82) pour stocker une valeur antérieure de la moyenne calculée pour le point précédent, de seconds moyens pour stocker des valeurs de fonds déjà affectées (80, 90, 100) et de moyens d'addition-soustraction (84, 86, 92, 102) pour fournir la moyenne pour chaque point à partir de la moyenne contenue dans les premiers moyens de stockage et des valeurs de fond contenues dans les seconds moyens de stockage.

EP 0 351 003 A1

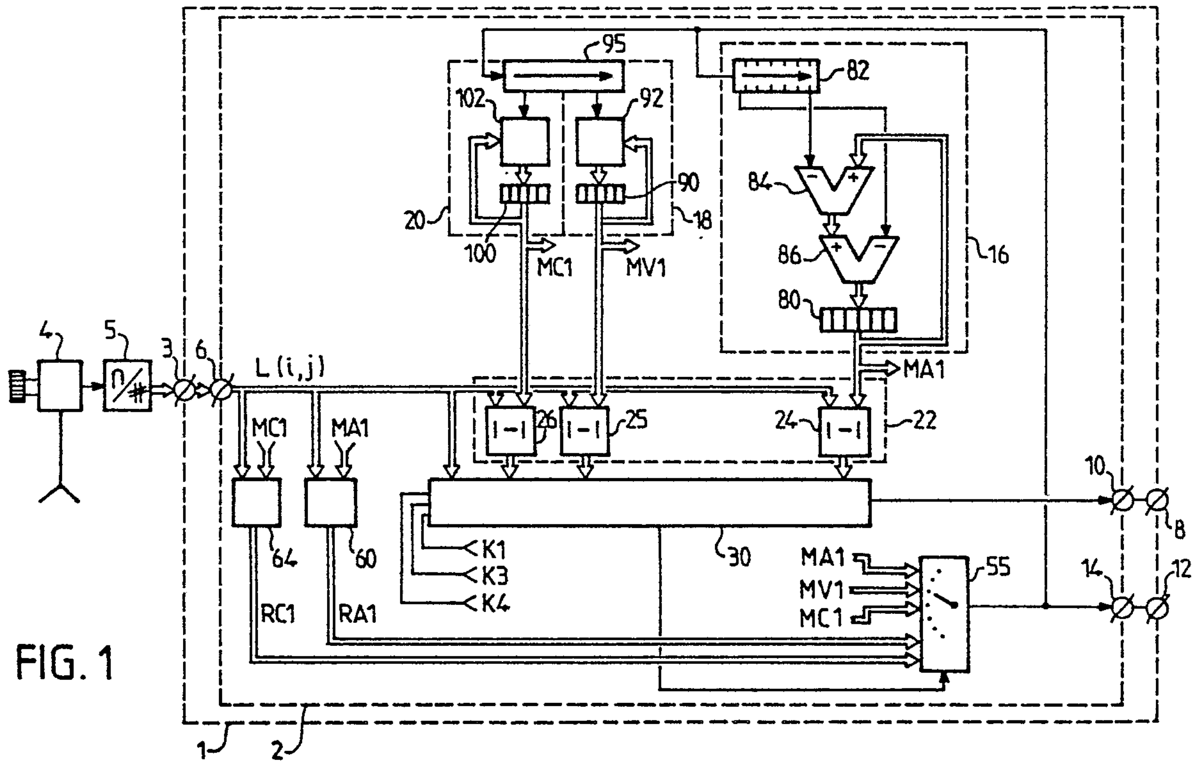
95
102
92
90
20
18
100
MC1
MV1
82
84
86
16
80
MA1
4
5
3
6
L (i,j)
MC1
MA1
26
25
24
22
64
60
30
K1
K3
K4
MA1
MV1
MC1
55
RC1
RA1
10
8
14
12
1
2

FIG. 1

**Dispositif pour déterminer des objets contrastés dans une image.**

La présente invention concerne un dispositif pour déterminer des objets contrastés dans une image, dispositif comportant une entrée pour recevoir des échantillons de signal vidéo dont chacun représente la luminance d'un point d'image et dont l'ordre d'apparition est donné par un balayage horizontal combiné avec un balayage vertical, une première sortie pour fournir des valeurs de fonds relatives à chaque point d'image, une deuxième sortie pour fournir l'indication que le point d'image appartient à un objet contrasté, au moins un bloc de traitement pourvu d'organes de calculs de moyennes pour calculer pour chaque point d'images différentes valeurs de moyennes de valeur de fonds, d'un organe de mesure de contraste pour fournir une valeur d'écart entre les moyennes et la luminance du point, d'un organe de comparaison pour fournir ladite indication en comparant les différentes valeurs d'écart avec au moins une valeur de seuil prédeterminée et d'un organe d'affectation de valeur de fond pour affecter une valeur de fond pour chaque point d'image à partir desdites moyennes.

Un tel dispositif trouve des applications importantes par exemple pour reconnaître des cibles privilégiées dans un paysage tel que cela est indiqué dans l'article "Autothreshold-Autoscreener/ELIR System" présenté à NEACON 78 et publié par IEEE CH 1336-7/78/0000 pp. 1180-1185, ou pour reconnaître des formes comme dans l'article de J-M.Zurcher "Extraction de contours en traitement électronique des images : II-Processeur spécialisé pour signal vidéo" paru dans le BULLETIN DE L'ASSOCIATION SUISSE DES ELECTRICIENS, vol.70, n° 11, juin 1979, pages 532-536, Zurich (CH).

Dans la demande de brevet français N° 2 602 387 au nom de la demanderesse, on décrit un dispositif qui met en oeuvre un procédé particulièrement efficace pour ce genre d'applications. Cependant, ce dispositif décrit n'est pas apte à traiter les images en temps réel.

Pour cela un tel dispositif est remarquable en ce que les organes de calculs de moyennes sont constitués à partir de premiers moyens de stockage pour stocker une valeur antérieure de la moyenne calculée pour le point précédent, de seconds moyens pour stocker des valeurs de fonds déjà affectées et de moyens d'addition-soustraction pour fournir la moyenne pour chaque point à partir de la moyenne contenue dans les premiers moyens de stockage et des valeurs de fond contenues dans les seconds moyens de stockage.

La description suivante accompagnée des dessins ci-annexés, le tout donné à titre d'exemple non limitatif fera bien comprendre comment l'invention peut être réalisée.

La figure 1 montre un premier dispositif de l'invention.

La figure 2 montre les répartitions de points d'image sur lesquelles différentes moyennes sont calculées.

La figure 3 montre la structure d'organes de calcul de moyenne.

La figure 4 montre la structure d'un organe de comparaison.

La figure 5 montre un deuxième dispositif de l'invention.

La figure 6 montre des répartitions de points sur lesquelles d'autres moyennes sont calculées.

La figure 7 montre la structure d'un bloc de sortie.

La figure 8 montre la structure d'un circuit-inverseur.

La figure 9 est un schéma pour expliquer le fonctionnement de ce circuit.

A la figure 1, le dispositif pour extraire des objets contrastés porte la référence 1. Il est composé d'un seul bloc de traitement 2. L'entrée 3 du dispositif 1 est connectée à une caméra 4 par l'intermédiaire d'un convertisseur analogique-numérique 5. L'entrée 6 du bloc 2 constitue l'entrée 3 du dispositif.

La figure 2 montre comment sont analysées les images. Chaque image est décomposée en lignes ...j-2, j-1, j, j+1,... de haut en bas comme l'indique la flèche verticale FV et chaque ligne est décomposée en points ..., i-10,... i-3, i-2, i-1, i, i+1, i+2,..., i+..., allant de gauche à droite comme l'indique la flèche horizontale FH1. La luminance de chaque point i,j est représentée par un échantillon numérique L(i,j) de 8 éléments binaires, par exemple. Pour mettre en oeuvre le procédé qui est décrit dans la demande de brevet n° 2 602 387 précitée et qui sera rappelé par la suite, on est amené à calculer différentes moyennes des valeurs de fond qui apparaissent à une borne de sortie 12 du dispositif, constituant aussi la borne 14 du bloc 2 et qui, par conséquent, ont déjà été calculées par le dispositif 1.

Ces valeurs moyennes sont pour le point courant i,j qui est entouré d'un cercle à la figure 2 :

- la valeur de moyenne aval MV1 relative aux points d'un domaine DV1 comprenant les points i, i+1, ..., i+7 de la ligne j-1
- la valeur de moyenne centrale MC1 relative aux points d'un domaine DC1 comprenant les points i-3, ..., i, ..., i+3 de la ligne j-1
- la valeur de moyenne amont MA1 relative aux points d'un domaine DA1 comprenant les points i-9, ..., i-2

de la ligne j.

L'indication qu'un point appartient à un objet contrasté est rendue disponible à une borne 8 du dispositif, confondue avec la borne 10 du bloc 2. Pour calculer ces moyennes différents organes de calculs de moyenne sont prévus. Un organe de calcul de moyenne amont 16 pour fournir la valeur de moyenne amont MA1, un organe de calcul de moyenne aval 18 pour fournir la valeur de moyenne aval MV1 et un organe de calcul de moyenne centrale 20 pour fournir la valeur de moyenne centrale MC1. Seul l'organe 16 est montré en détail à la figure 1. Un organe de mesure de contraste 22 compare la valeur des moyennes MA1, MV1 et MC1 avec la luminance L(i,j). Cet organe 22 effectue les différences, en valeur absolue, de la luminance avec les différentes moyennes MA1, MV1 et MC1 et ceci au moyen d'organes 24, 25 et 26. Un organe de comparaison 30 effectue différentes comparaisons entre les valeurs fournies par 30, la luminance et différentes valeurs de seuil K1, K3 et K4. Cet organe de comparaison 30 fournit sur la borne 10 l'indication d'appartenance à un objet contrasté. Cet organe 30 coopérant avec un organe d'affectation 55 détermine aussi la valeur du fond F1(i, j) à affecter au point i,j.

Pour cela l'organe 30 élabore un code de commutation pour l'organe d'affectation 55 constitué par un multiplexeur ; celui-ci est muni d'entrées pour recevoir respectivement les valeurs moyennes MA1, MV1, MC1, la valeur de luminance L(i,j) et les valeurs de réactualisation RA1 et RC1 fournies par les organes 60 et 61 qui élaborent respectivement les valeurs 1/2[L(i,j) + MA1] et 1/2[L(i,j) + MC1].

Selon une caractéristique de l'invention, l'organe de calcul de moyenne 16 est formé d'un premier moyen de stockage constitué par un registre d'accumulation 80 contenant la valeur de moyenne antérieure, d'un second moyen de stockage constitué par un registre à décalage 82 contenant des valeurs de fonds déjà déterminées et des moyens d'addition-soustraction constitués par un soustracteur 84 et par un additionneur 86 pour additionner et soustraire, en valeur algébrique, différentes valeurs de fonds rendues disponibles par le registre 82 avec la valeur antérieure de la moyenne contenue dans le registre 80.

De la même manière, l'organe de calcul de moyenne aval 18 est formé par un registre d'accumulation 90 contenant déjà une valeur antérieure et de moyens d'addition-soustraction 92 pour faire la somme algébrique de différentes quantités provenant du registre 90 et d'un deuxième moyen de stockage 95 commun avec l'organe de calcul de moyenne centrale 20. Cet organe 20 comporte, lui aussi, un registre d'accumulation 100 coopérant avec des moyens d'addition-soustraction 102. Les organes 18 et 20 sont montrés plus en détail à la figure 3.

Les seconds moyens de stockage communs 95 sont formés d'une mémoire FIFO 110 suivie d'un registre à décalage 112 qui a pour but de rendre disponibles les échantillons numériques de fond utiles aux calculs de moyenne. L'organe de calcul 18 a la même structure que l'organe 16. Les moyens d'addition-soustraction sont formés par un soustracteur 121 et un additionneurs 122 pour additionner, en valeur algébrique, différentes valeurs de fond rendues disponibles par le registre 112 avec la valeur antérieure de la moyenne contenue dans le registre d'accumulation 90.

L'organe de calcul 20 est formé tout d'abord de deux additionneurs 130 et 131 prévus pour additionner en valeur algébrique différentes valeurs provenant du registre à décalage 112. Les résultats de ces additionneurs sont stockés dans des registres 133 et 135. Un autre additionneur 137 additionne le résultat contenu dans le registre 133 avec la valeur antérieure de la moyenne contenue dans la mémoire 100. Un soustracteur 139 enlève au résultat fourni par l'additionneur 137 la valeur contenue dans le registre 135. Le résultat de 139 constitue la nouvelle valeur à emmagasiner dans le registre 100. On remarquera que cet organe 20 fonctionne avec un étage de pipe-line de plus (les registres 133 et 135) que les organes 16 et 12.

L'organe de comparaison 30 est montré en détail à la figure 4. Il se compose d'une première série de comparateurs 150 et 151 pour comparer la valeur de luminance L(i,j) avec deux valeurs de seuil K3 et K4. Une porte OU 152 combine les résultats de ces comparateurs pour fournir un "1" logique lorsque le signal L(i,j) est compris entre ces deux valeurs ou non. Une deuxième série formée par des comparateurs 160, 161 et 162 compare les résultats formés par les organes de différence 24, 25 et 26 respectivement avec une valeur de seuil K1. Une troisième série de comparateurs 170, 171 et 172 compare deux à deux les résultats des organes 24, 25 et 26. L'organe 170 compare les résultats de 24 et 26, l'organe 171 les résultats de 25 et 26 et l'organe 172 les résultats de 24 et 25.

Un organe de logique 175 recevant le résultat de toutes ces comparaisons fournit d'une part, l'indication d'appartenance pour la borne 10 et d'autre part, élabore le code de commutation pour l'organe d'affectation 55.

Il est possible maintenant d'expliquer le fonctionnement du dispositif de la figure 1.

L'organe de calcul de moyenne 16 doit effectuer, selon l'exemple de réalisation décrit, le calcul suivant pour tout point i,j :

$$MA1(i,j) = \frac{1}{8} \sum_{n=2}^{9} F1(i-n,j) \qquad (1)$$

L'organe de calcul de moyenne 18 effectue le calcul :

$$MV1(i,j) = \frac{1}{8} \sum_{n=0}^{7} F1(i+n,j-1) \qquad (2)$$

L'organe de calcul de moyenne 20 effectue le calcul :

$$MC1(i,j) = \frac{1}{8} \left[ \sum_{n=-3}^{-1} F1(i+n,j-1) + 2.F1(i,j-1) + \sum_{n=1}^{3} F1(i+n,j-1) \right] \qquad (3)$$

La formule (3) indique que le pixel central (ou point d'image) est affecté d'un poids double.

Pour éviter des temps de calcul trop longs l'invention propose d'éviter le plus possible les additions successives car les additionneurs et soustracteurs prennent trop de temps pour le calcul. La formule (1) est exécutée de la manière suivante par l'organe 16.

Le soustracteur 84 fait l'opération suivante :

8.MA1(i-1,j) - F1(i-10,j)

et l'additionneur 86 ajoute à ce résultat la valeur F1(i-2,j), de sorte que (1) peut s'écrire :

Ma1(i,j) = 1/8[8.MA1(i-1,j) - F1(i-10,j) + F1(i-2,j)] (4)

On notera que les opérations 8. et 1/8 s'effectuent simplement par câblage et ne coûtent aucun temps d'opération.

De même, en ce qui concerne la formule (2), le soustracteur 121 exécute :

8.MV1(i-1,j) - F1(i-1,j-1)

et à ce résultat l'additionneur 122 ajoute + F1(i+7, j-1), la formule (2) s'écrit alors :

MV1(i,j) = 1/8[8.MV1(i-1,j) - F1(i-1,j-1) + F1(i+7, j-1)] (5)

A cause de l'étage de pipe-line supplémentaire, le fonctionnement de l'organe 20 est un peu plus compliqué.

Pour calculer la moyenne MC1(i-1,j) le registre d'accumulation 100 doit contenir MC(i-1,j) et les registres 133 et 135 les quantités QP(i) et QM(i) telles que :

QP(i) = F1(i+3,j-1) + F1(i,j-1)

QM(i) = F1(i-4,j-1) + F1(i-1,j-1)

de sorte que (3) peut s'écrire :

MC1(i,j) = 1/8[8.MC(i-1,j) + QP(i) - QM(i)]

On notera qu'aux entrées des additionneurs 130 et 131 on a les quantités nécessaires pour calculer les quantités QP(i+1) et Qm(i+1) c'est-à-dire :

QP(i+1) = F1(i+4,j-1) + F1(i+1,j-1)

QM(i+1) = F1(i-3,j-1) + F1(i,j-1)

Les tableaux I et II ci-dessous résument le fonctionnement du dispositif de l'invention en donnant les éléments pour réaliser l'organe de logique 175.

TABLEAU I

| 152 | 160 | 161 | 162 | 10 |
|---|---|---|---|---|
| 0 | 1 | 1 | 1 | 1 |
| 1 | 1 | 1 | 1 | 0 |
| X | 0 | X | X | 0 |
| X | X | 0 | X | 0 |
| X | X | X | 0 | 0 |

TABLEAU II

| 15λ | 170 | 171 | 172 | 55 |
|---|---|---|---|---|
| 1 | 1 | 1 | X | MC1 |
| 1 | X | 0 | 0 | MV1 |
| 1 | 0 | X | 1 | MA1 |
| 0 | 1 | X | 0 | RA1 |
| 0 | 0 | 0 | X | RC1 |

Le chiffre "1" indique pour les comparateurs 160, 161 et 162 que K1 est supérieur aux valeurs appliquées à leurs autres entrées. En ce qui concerne 170, 171, 172 le chiffre 1 signifie que :

$|MA1-L(i,j)|>|MC1-L(i,j)|$

$|MV1-L(i,j)|>|MC1-L(i,j)|$

$|MV1-L(i,j)|>|MA1-L(i,j)|$

le symbole "X" signifie 1 ou 0 indifféremment.

Le chiffre "1" dans la colonne concernant la borne 10 signifie que le point courant appartient à un objet contrasté.

Dans le Tableau II, la colonne concernant l'organe 55 indique la commutation effectuée.

A la figure 5, on a représenté le mode préféré de réalisation du dispositif de l'invention 1. Ce dispositif met en oeuvre d'une part, le traitement des points l'un après l'autre selon le sens du balayage de la caméra et indiqué par la flèche FH1 à la figure 2 et d'autre part, le traitement effectué en sens inverse, ce qui est indiqué par la flèche FH2 à la figure 6. On rappelle que ce double traitement est suggéré dans la demande de brevet n° 2 602 387 précitée.

Le dispositif de la figure 5 comporte un premier bloc estimateur 200 déjà décrit à la figure 1 et un deuxième bloc 250 de structure identique. Le bloc 200 effectue le traitement selon le sens FH1 et pour cela son entrée est connectée directement à l'entrée 3. Le bloc 250 effectue, lui, le traitement en sens inverse, c'est-à-dire selon le sens FH2 et pour cela, son entrée est connectée à la sortie d'un circuit inverseur de points 270 constitué d'une mémoire de type LIFO qui est reliée à l'entrée 3 et qui inverse donc le sens des points d'une ligne.

Un bloc de sortie 300 fournit à la sortie 12 la valeur du fond la plus appropriée et sur des deuxièmes sorties 8a et 8b l'indication que le point traité est une cible (sortie 8a) ou non et en outre, l'indication de la nature de la cible (soit plus ou moins lumineuse, soit plus ou moins chaude que le fond), (sortie 8b). Pour que ce bloc de sortie 300 puisse traiter les points de façon cohérente un autre circuit inverseur de points 305 est prévu entre la sortie du bloc 200 et l'entrée afférente du bloc 300. Différents éléments de retard 310 et 312 ont été ajoutés à l'entrée du circuit 270 et à la sortie du circuit 305 afin de tenir compte des différentes durées de traitement. A la sortie de l'organe de retard 312 on obtient une première valeur de fond F1 et à la sortie du block 250 une deuxième valeur de fond F2 qui sont toutes deux appliquées aux entrées du bloc 300, accompagnées de la valeur de luminance L(i,j) obtenue à la sortie d'un organe de retard 322. Le dispositif de la figure 5 peut comporter en outre une sortie 330 connectée à la sortie de la

mémoire 270 par l'intermédiaire de l'élément de retard 322.

A la figure 7, on a montré en détail la structure du bloc de sortie 300.

Il se compose tout d'abord de deux organes de différence 400 et 402 qui donnent la valeur absolue de la différence entre F1(i,j) et le signal de luminance pour le premier et la différence entre F2 et ce même signal de luminance pour le deuxième. L'organe 402 possède une sortie 403 pour donner le signe de cette différence. Ces valeurs de différence formées respectivement par les organes 400 et 402 sont comparées respectivement au moyen de comparateurs 410 et 412 à une valeur de seuil prédéterminée K2. Un troisième comparateur 415 compare entre elles les valeurs fournies par ces organes 400 et 402. Un premier circuit logique 420 recevant le signal du comparateur 415 fournit un signal de commande pour un multiplexeur 425 pour qu'un des fonds F1 et F2 soit le fond retenu à la sortie. Un deuxième circuit logique 430 fournit les signaux indicateurs de cibles et du signe de leur contraste dans le fond à partir des signaux provenant de la sortie 403, et des comparateurs 410 et 412.

Le fonctionnement du circuit 420 est résumé dans le Tableau III ci-dessous, et celui du circuit 430 dans le Tableau IV.

TABLEAU III

| 415 | 425 |
|---|---|
| 1 | F1 |
| 0 | F2 |

TABLEAU IV

| 403 | 410 | 412 | 8a | 8b |
|---|---|---|---|---|
| | 1 | 1 | 1 | 1 |
| 1 | 1 | 0 | 1 | 1 |
| | 0 | 1 | 1 | 1 |
| | 1 | 1 | 1 | 0 |
| 0 | 1 | 0 | 1 | 0 |
| | 0 | 1 | 1 | 0 |
| X | 0 | 0 | 0 | X |

Le signe "1" à la sortie 8a signifie que le point appartient à un objet plus contrasté que son voisinage.

Le signe "1" à la sortie 8b signifie que le point appartient à un objet plus lumineux que son voisinage.

Le signe "0" à la sortie 8b signifie que le point appartient à un objet sombre par rapport à son voisinage.

Le signe "1" du comparateur 415 signifie :

$|F1(i,j)-L(i,j)|<|F2(i,j)-L(i,j)|$

Le signe "1" à la sortie 403 signifie :

$L(i,j)-F1(i,j)>0$

Le signe "1" à la sortie du comparateur 410 signifie :

$|F2(i,j)-L(i,j)|>K2$

Le signe "1" à la sortie du comparateur 412 signifie :

$|F1(i,j)-L(i,j)|>K2$

La figure 8 montre, en détail, la structure d'un circuit inverseur de points 270-305. Il est constitué à partir d'une mémoire 500 à accès aléatoire. Cette mémoire peut être d'un type à deux accès 501 et 502, comme représenté à la figure 8. Cependant il est bien évident d'utiliser à sa place une mémoire à simple accès et de prévoir une gestion de multiplexage pour l'accès des données entrantes et des données

sortantes. Le premier accès 501 reçoit des données à inscrire, le deuxième accès 502 fournit les données prélevées. Cette mémoire est adressée par un compteur-décompteur 505 qui compte de 0 à M-1 et décompte de M-1 à 0, M étant le nombre de points d'image par ligne. A ce compteur sont rattachés deux décodeurs 510 et 512. Le décodeur 510 fournit un signal actif lorsque le contenu du compteur-décompteur passe à zéro pour le mettre en position de comptage. Le décodeur 512 fournit un signal actif lorsque son contenu est maximal (M-1) pour le mettre en position de décomptage. Il est à noter que la mémoire 500 peut avoir assez de lignes d'entrée et de sortie pour pouvoir inverser les informations provenant du bloc 200 et les informations vidéo.

La figure 9 montre comment un tel circuit inverseur inverse, dans le temps, des données qui lui sont appliquées. La ligne a représente l'évolution du contenu du compteur 505 qui est en position de comptage, son contenu évolue donc de 0 à M-1. La ligne b représente des données i(n) relatives à des points d'image d'une ligne j, son contenu évolue de 0 à M-1. En des instants W la mémoire 500 va donc être alimentée par les données i(0) à i(M-1) pour des contenus de compteur-décompteur allant de 0 à M-1. Ceci est montré à la ligne c.

Le contenu du compteur-décompteur 505 va pour le ligne suivante évoluer en sens inverse, c'est-à-dire de M-1 à 0 ligne d. Les données i′(m) de la ligne suivante j+1 évoluent toujours dans le même sens, m allant de 0 à M-1 (voir ligne e) de sorte que la donnée i′(0) sera inscrite à l'adresse M-1 à l'instant W. Mais ces instants W sont précédés de temps de lecture R de sorte qu'à la sortie 502 la donnée i(M-1) sera restituée. Ainsi les données relatives à la ligne j apparaîtront dans l'ordre (i(M-1), i(M-2),..., i(0), donc inversé INV (ligne q) alors que les données de la ligne j+2 seront enregistrées dans l'ordre normal i′(0), i′(1),..., i′-(M-1). Lorsque toutes ces données seront enregistrées le compteur-décompteur 505 sera remis en position de comptage ligne b tandis que les données relatives à la ligne j+2 seront disponibles à l'entrée 501 pour y être enregistrées (ligne i). A la sortie 502 on a les données relatives à la ligne j+1 dans l'ordre inversé INV i′(M-1), i′(M-2),..., i′(0).

## Revendications

1. Dispositif pour déterminer des objets contrastés dans une image, dispositif comportant une entrée pour recevoir des échantillons de signal vidéo dont chacun représente la luminance d'un point d'image et dont l'ordre d'apparition est donné par un balayage horizontal combiné avec un balayage vertical, une première sortie pour fournir des valeurs de fonds relatives à chaque point d'image, une deuxième sortie pour fournir l'indication que le point d'image appartient à un objet contrasté, au moins un bloc de traitement pourvu d'organes de calculs de moyennes pour calculer pour chaque point d'image différentes valeurs de moyennes de valeur de fonds, d'un organe de mesure de contraste pour fournir une valeur d'écart entre les moyennes et la luminance du point, d'un organe de comparaison pour fournir ladite indication en comparant les différentes valeurs d'écart avec au moins une valeur de seuil prédéterminée et d'un organe d'affectation de valeur de fond pour affecter une valeur de fond pour chaque point d'image à partir desdites moyennes, caractérisé en ce que les organes de calculs de moyennes sont constitués à partir de premiers moyens de stockage pour stocker une valeur antérieure de la moyenne calculée pour le point précédent, de seconds moyens pour stocker des valeurs de fonds déjà affectées et de moyens d'addition-soustraction pour fournir la moyenne pour chaque point à partir de la moyenne contenue dans les premiers moyens de stockage et des valeurs de fond contenues dans les seconds moyens de stockage.

2. Dispositif pour déterminer des objets contrastés selon la revendication 1, caractérisé en ce qu'il comporte un premier bloc de traitement pour traiter les échantillons apparaissant dans ledit ordre et pour fournir une première valeur de fond, un circuit inverseur pour inverser ledit ordre, un deuxième bloc de traitement pour traiter les échantillons à la sortie du circuit inverseur d'ordre et pour fournir une deuxième valeur de fond et un bloc de sortie pour fournir d'une part ladite indication et d'autre part pour fournir l'une des première ou seconde valeur de fond.

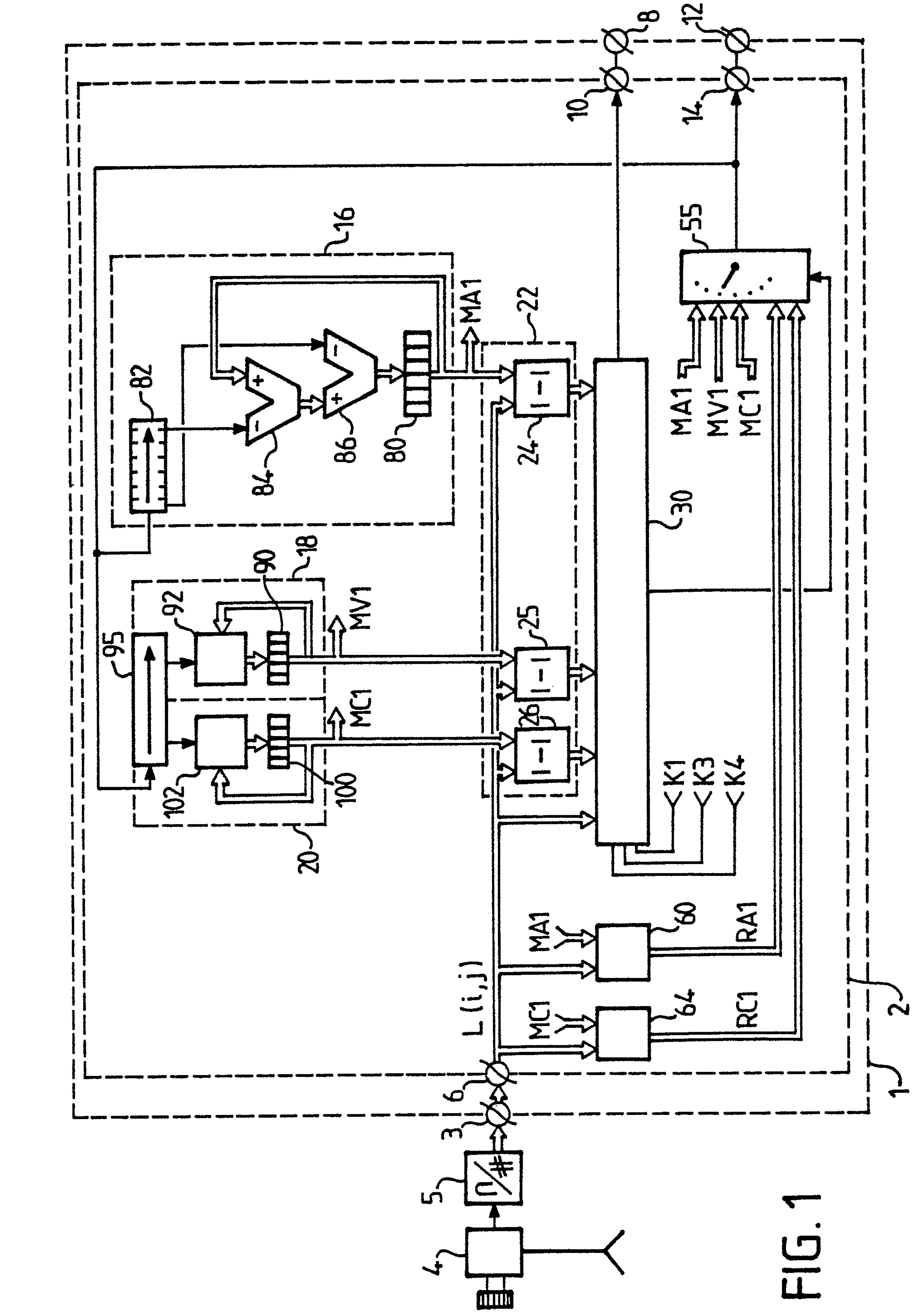


FIG. 1

1-V-PHF 88-575

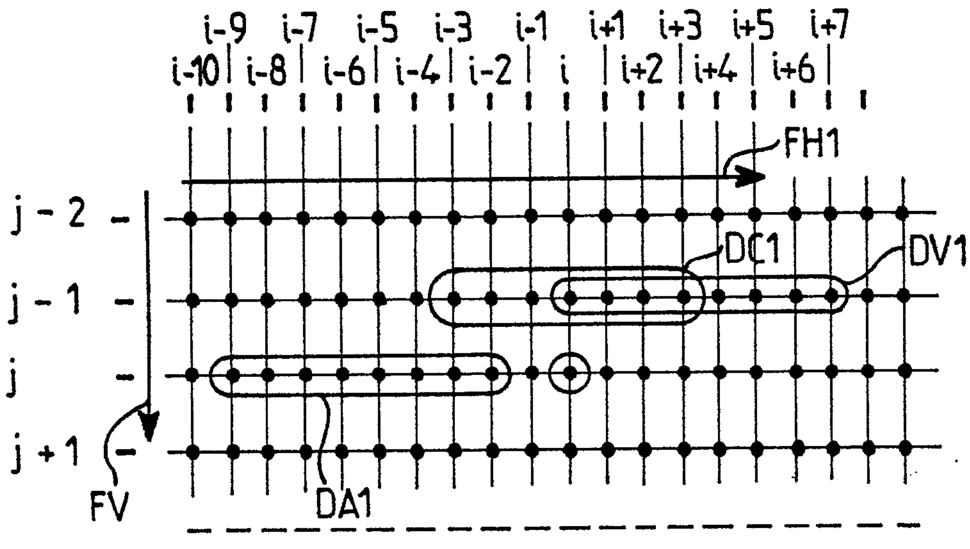


FIG. 2

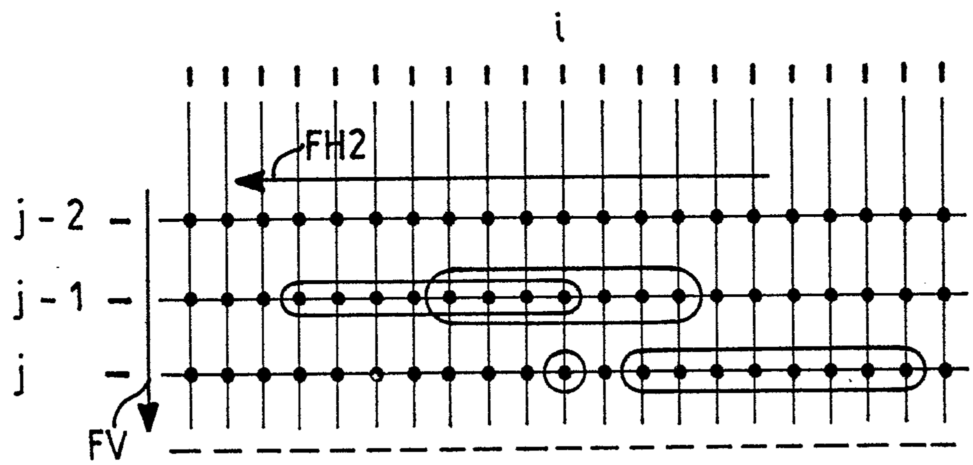


FIG. 6

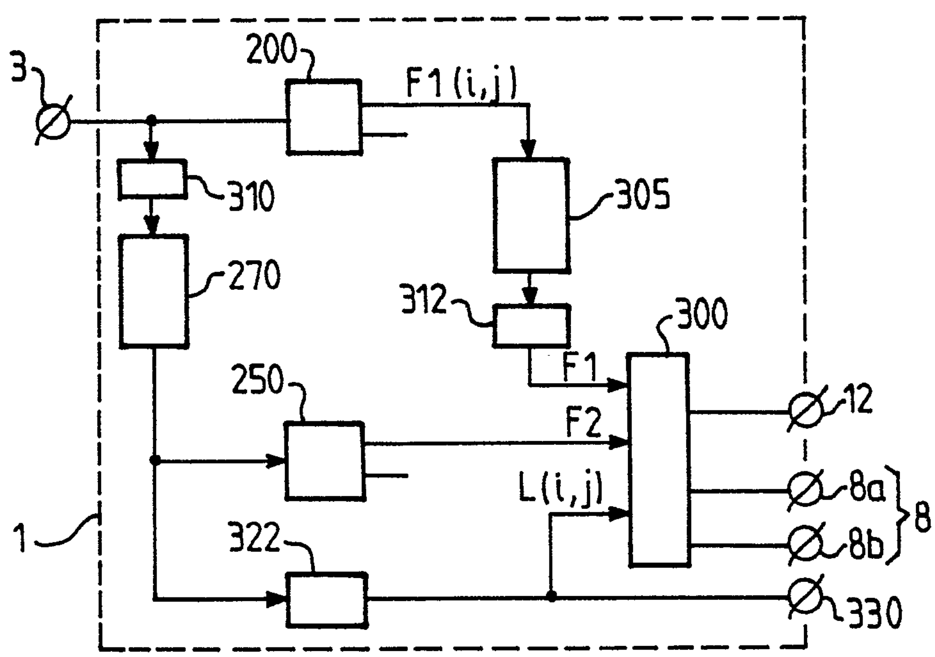


FIG. 5

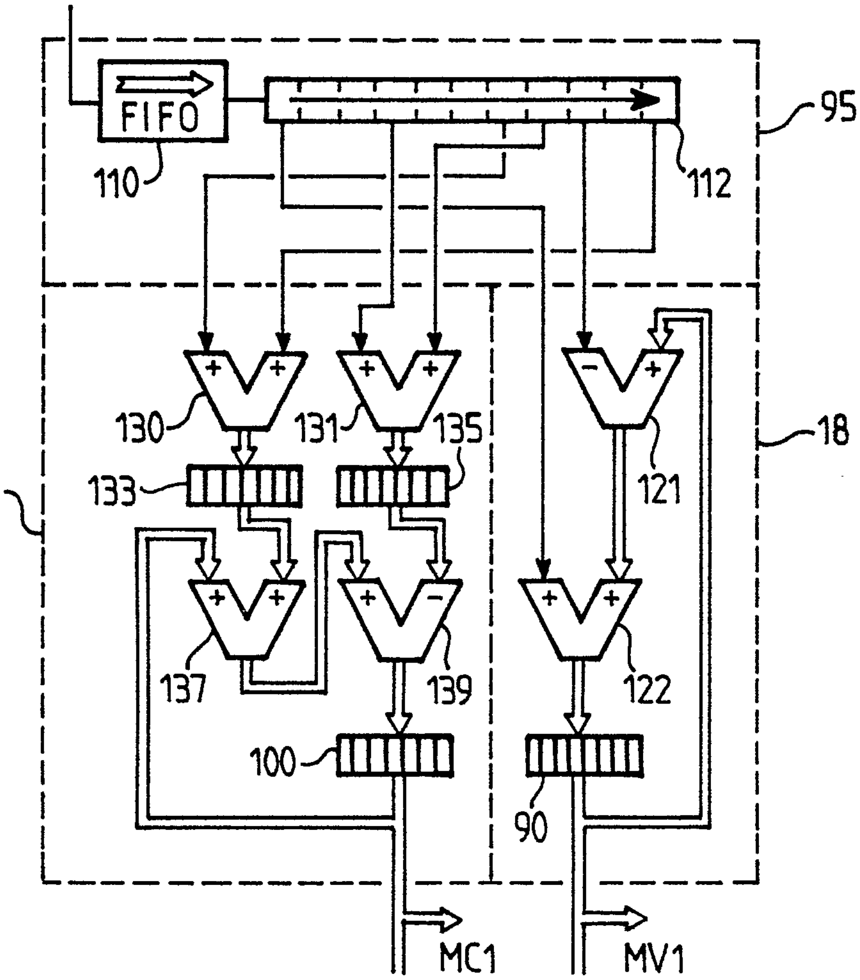
FIFO
110
112
95
18
20
130
131
135
121
133
137
139
122
100
90
MC1
MV1

FIG. 3

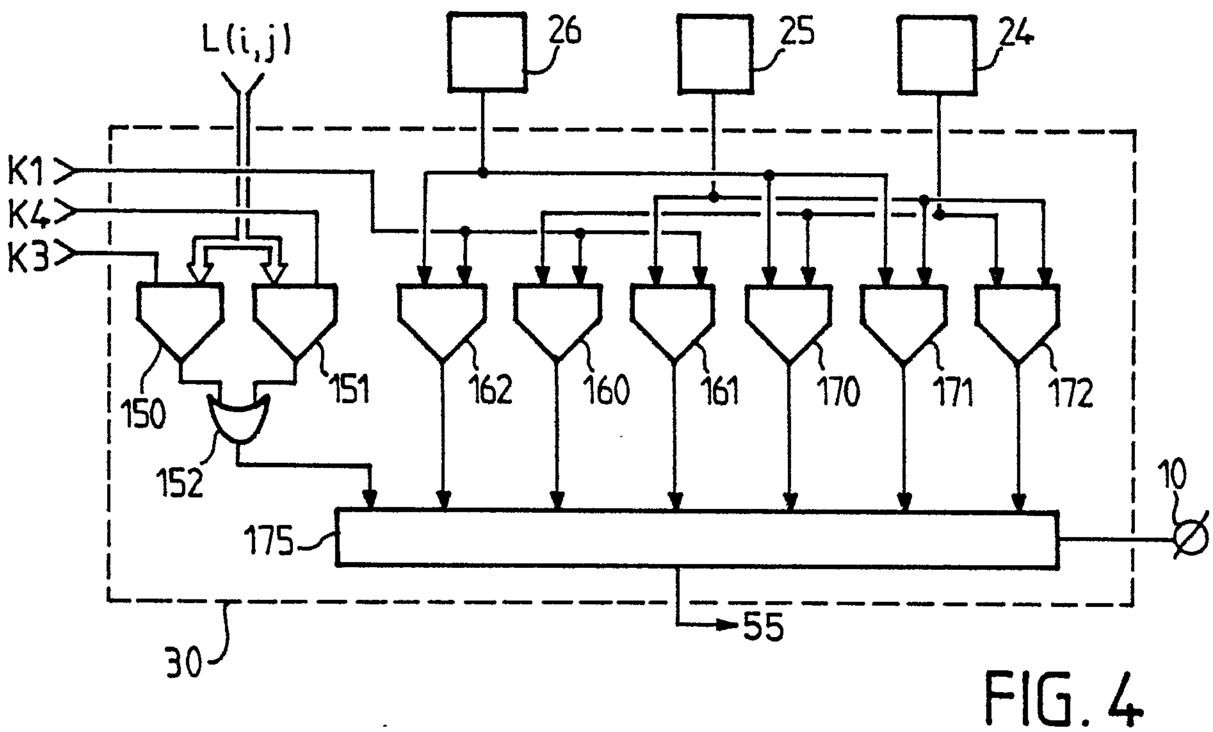
L(i,j)
26
25
24
K1
K4
K3
150
151
152
162
160
161
170
171
172
175
10
30
55

FIG. 4

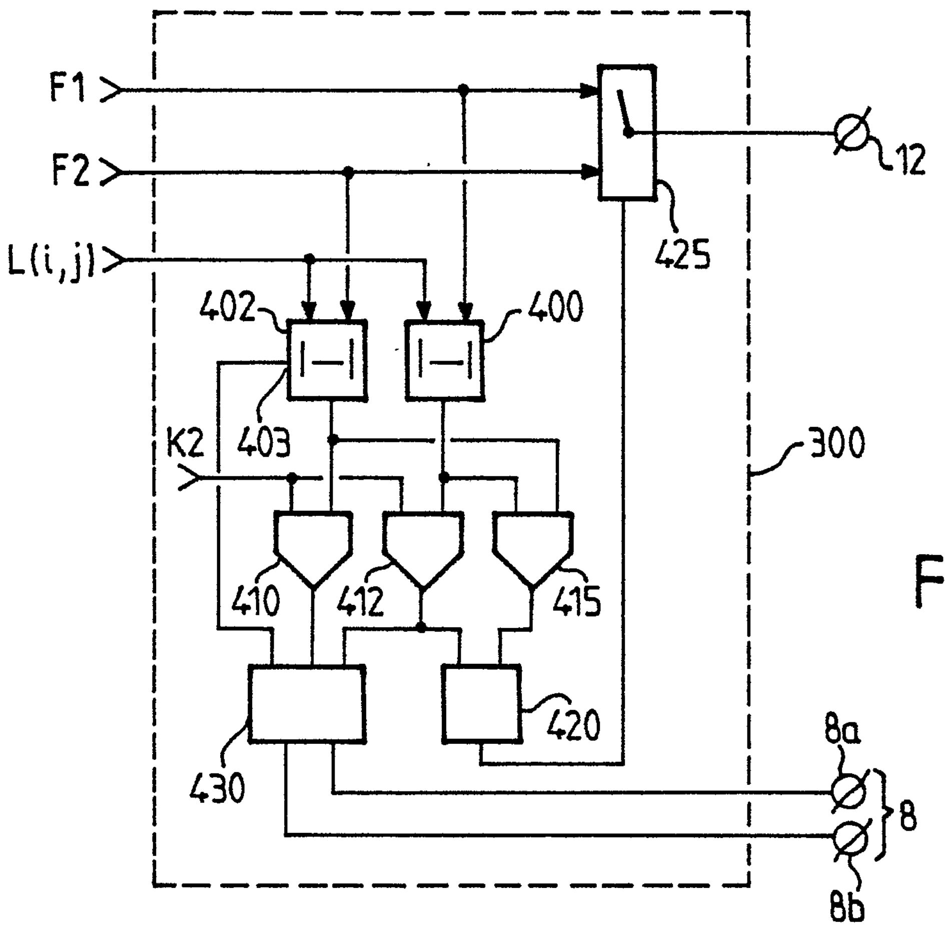
F1
F2
L(i,j)
K2
402
403
400
425
12
300
410
412
415
430
420
8a
8
8b

FIG.7

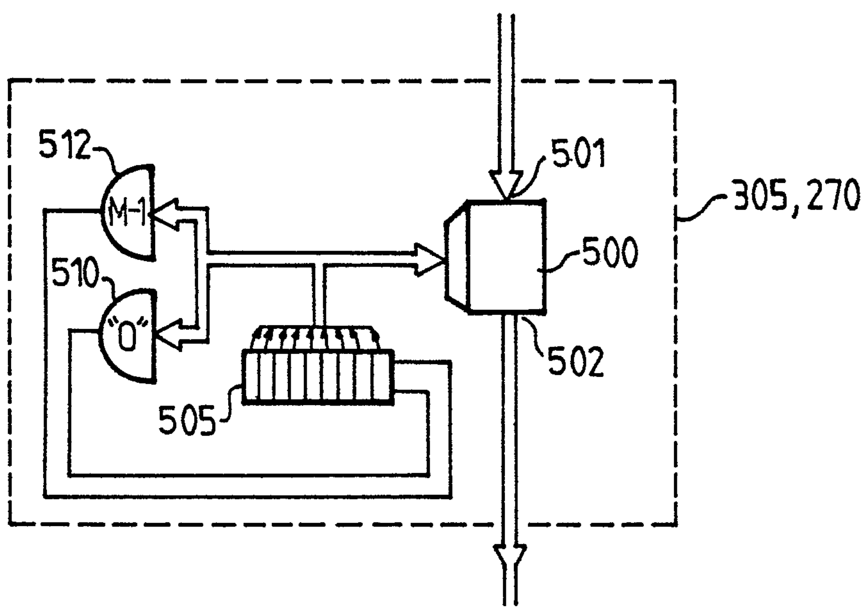
512
M-1
510
"0"
505
501
500
502
305,270

FIG.8

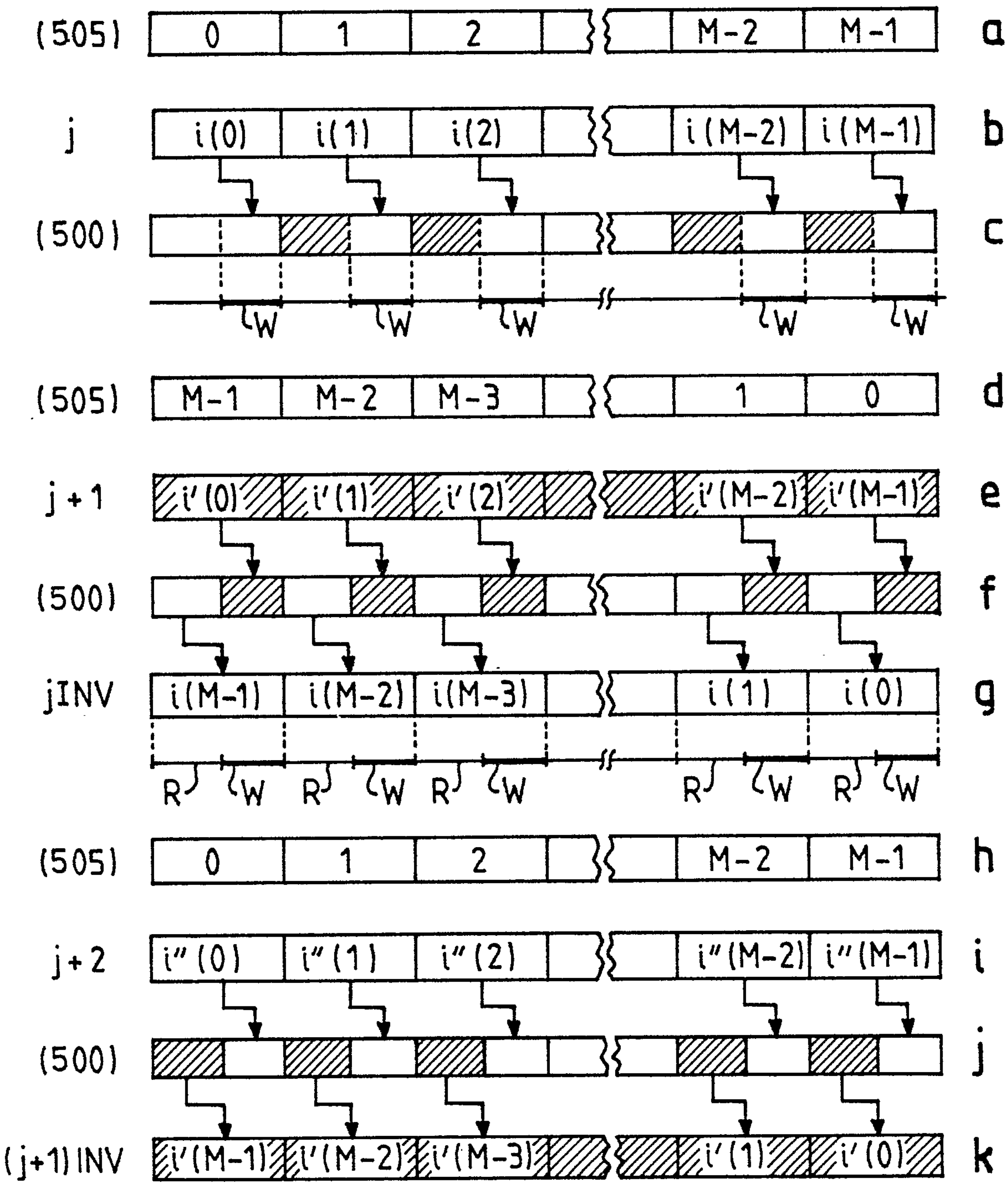


FIG.9

5-V- PHF 88-575

Office européen des brevets

# RAPPORT DE RECHERCHE EUROPEENNE

Numero de la demande

EP 89 20 1793

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| Y,D | EP-A-0 255 177 (TELECOMMUNICATIONS RADIOELECTRIQUES ET TELEPHONIQUES)<br>* Résumé; colonnes 9-11 * | 1 | G 06 F 15/36<br>G 06 F 15/68 |
| Y | US-A-3 710 081 (P.F. APITZ)<br>* Résumé; colonne 5, ligne 63 - colonne 6 * | 1 | |
| A | JOURNAL OF PHYSICS E - SCIENTIFIC INSTRUMENTS, vol. 13, no. 12, décembre 1980, pages 1263-1265, The Institute of Physics, Dorking, GB; R. SRINIVASAN et al.: "A programmable digital signal averager"<br>* En entier * | 1 | |
| A | EP-A-0 188 678 (IBM CORP.)<br>* Résumé; page 13, lignes 5-25 * | 2 | |

| DOMAINES TECHNIQUES RECHERCHES (Int. Cl.5) |
|---|
| G 06 F |

Le présent rapport a été établi pour toutes les revendications

| Lieu de la recherche | Date d'achèvement de la recherche | Examinateur |
|---|---|---|
| LA HAYE | 23-10-1989 | CHATEAU J.P. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant